# EUROPEAN PATENT APPLICATION

(11) **EP 4 567 921 A1**
(43) Date of publication of application: **11.06.2025**
(21) Application number: 22956072.7
(22) Date of filing: 25.08.2022
(51) Int. Cl.: H01M 4/36, H01M 4/38, H01M 4/525, H01M 10/052

(54) **SECONDARY BATTERY AND ELECTRICAL DEVICE**

(71) Applicant: Contemporary Amperex Technology Co., Limited, Ningde, Fujian 352100 (CN)
(72) Inventor: LI, Xuan, Ningde, Fujian 352100 (CN); SUN, Xin, Ningde, Fujian 352100 (CN); WU, Lili, Ningde, Fujian 352100 (CN); CHEN, Xingbu, Ningde, Fujian 352100 (CN); SONG, Peidong, Ningde, Fujian 352100 (CN); YUN, Liang, Ningde, Fujian 352100 (CN); LIU, Rundie, Ningde, Fujian 352100 (CN)
(74) Representative: Kraus & Lederer PartGmbB
(86) International application number: PCT/CN2022/114857
(87) International publication number: WO 2024/040525

(57) **Abstract**

The present application provides a secondary battery (4) and an electrical apparatus. The secondary battery (4) includes a positive electrode plate and a negative electrode plate, the total capacity of the positive electrode plate is P, the total capacity of the negative electrode plate is N, N and P satisfy: N/P<1. The negative electrode plate includes a current collector, and a first negative electrode active layer, an insulating material layer, and a second negative electrode active layer which are arranged on the surface of the current collector in sequence. The secondary battery (4) has high energy density and excellent cycle performance.

## Description

### TECHNICAL FIELD

The present application relates to the field of batteries, and in particular, to a secondary battery and an electrical apparatus.

### BACKGROUND

Secondary batteries are increasingly widely used due to their characteristics of cleanness and renewability. A secondary battery such as a lithium-ion battery is mainly composed of five parts: a positive electrode, a negative electrode, a separator, electrolyte solution, and a shell. The secondary battery generates electric energy by mainly relying on movement of lithium ions between the positive electrode and the negative electrode. During charging, the lithium ions or sodium ions are deintercalated from the positive electrode and are intercalated into the negative electrode through electrolyte. During discharging, the opposite is true.

In recent years, with the rapid development of the new energy industry, people have increasing demands for new energy vehicles such as electric vehicles and electric bicycles, and also have increasingly high requirements for performance of the new energy vehicles. The secondary battery is an important power source for the electric vehicles. Therefore, people have increasingly high requirements on an energy density and cycle performance of the secondary battery.

As the demand increases, it is harder and harder for the traditional secondary battery to meet needs of people on its energy density and cycle performance. The secondary battery needs to be further improved.

### SUMMARY OF THE INVENTION

In view of the above problems, the present application provides a secondary battery and an electrical apparatus. The secondary battery has high energy density and excellent cycle performance.

To achieve the above objectives, a first aspect of the present application provides a secondary battery, wherein the secondary battery includes a positive electrode plate and a negative electrode plate; the total capacity of the positive electrode plate is P, and the total capacity of the negative electrode plate is N; N and P satisfy: N/P<1;
the negative electrode plate includes a current collector, and a first negative electrode active layer, an insulating material layer and a second negative electrode active layer which are arranged on the surface of the current collector in sequence.

In the above secondary battery, on the one hand, the total capacities of the positive electrode and the negative electrode of the secondary battery are designed and controlled to achieve N/P<1, so that a number of lithium ions in the positive electrode plate is much greater than a number of lithium ions that the positive electrode plate can hold. During charging, one part of excess lithium ions may be deposited on the negative electrode plate in the form of metal lithium, thereby forming a metal lithium composite with a negative electrode active material on the negative electrode plate. The formation of the metal lithium composite can improve the energy density of the secondary battery. On the other hand, the other part of the excess lithium ions may form lithium dendrites when deposited on the surface of the negative electrode plate, thereby causing a problem of short circuit of the battery. By the arrangement of the first negative electrode active layer, the insulating material layer, and the second negative electrode active layer on the surface of the current collector of the negative electrode plate in sequence, the lithium dendrites can be deposited between the insulating material layer and the interface of the current collector. By the arrangement of the second negative electrode active layer to absorb and coat the lithium dendrites passing through the insulating material layer, thereby preventing a short circuit caused by piercing a separator by lithium dendrites formed on the surface of the negative electrode plate. Thus, the secondary battery has high energy density and excellent cycle performance.

In any implementation of the present application, the thickness of the insulating material layer is L₁µm; the thickness of the second negative electrode active layer is L₂µm; L₁ and L₂ satisfy: L₁= -16×N/P + 17.5, 0.01≤L₂/L₁.

The thickness of the insulating material layer is set according to a value of N/P. When the value of N/P is small, if there are more excess lithium ions, the lithium dendrites deposited on the negative electrode plate are thicker, so that the insulating material layer is controlled to be thicker. Meanwhile, a ratio of the thickness of the insulating material layer to the thickness of the second negative electrode active layer is controlled to ensure that at good ion transmission, the short circuit caused by piercing a separator by the lithium dendrites formed on the surface of the negative electrode plate is avoided. Thus, the secondary battery has high energy density and excellent cycle performance.

In any implementation of the present application, 0.01≤L₂/L₁≤ 0.1.

Optionally, 0.03≤L₂/L₁≤ 0.08.

In any implementation of the present application, the thickness of the insulating material layer is 0.2 µm to 15 µm.

Optionally, the thickness of the insulating material layer is 3.1 µm to 7.9 µm.

In any implementation of the present application, the thickness of the first negative electrode active layer is 10 µm to 300 µm.

Optionally, the thickness of the first negative electrode active layer is 60 µm to 200 µm.

In any implementation of the present application, the composition of the second negative electrode active layer comprises a lithium-philic material.

During cyclic use of the secondary battery, the lithium dendrites are deposited between the insulating material layer and the interface of the current collector and continue to be accumulated. When the lithium dendrites are accumulated to an extent, the lithium dendrites may pierce the insulating material layer, are then intercalated into the second negative electrode active layer, and overlap the second negative electrode active layer. On the one hand, the second negative electrode active layer plays a role of further coating the lithium dendrites to prevent the lithium dendrites from piercing the separator. On the other hand, the lithium-philic material in the second negative electrode active layer can be further combined with the lithium dendrites intercalated into the second negative electrode active layer, thereby absorbing the lithium dendrites and preventing the lithium dendrites from being further diffused, to achieve the purpose of passivation.

In any implementation of the present application, metal lithium is used as a reference electrode, and the overpotential of the lithium-philic material is not greater than 0.03 V.

In any implementation of the present application, the lithium-philic material is one or more of Au, Ag, Zn, Fe, Co, Ni, Ga, Sn, In, Ge, Ti, Mu, Pt, Al, Mg, and their oxides, sulfides, fluorides, nitrides, chlorides and carbides.

In any implementation of the present application, the secondary battery satisfies at least one of the following conditions a to b:
a, in the second negative electrode active layer, the mass percentage of the lithium-philic material is 0.2% to 5%;
   optionally, in the second negative electrode active layer, the mass percentage of the lithium-philic material is 0.3% to 3%; and
b, metal lithium is used as a reference electrode, the overpotential of the second negative electrode active layer is 0 to 0.3 V.

In any implementation of the present application, the overpotential of the first negative electrode active layer is 0.1 V to 0.6 V.

In any implementation of the present application, each of the composition of the first negative electrode active layer and the composition of the second negative electrode active layer includes a negative electrode active material and metal lithium; and the metal lithium is loaded on the surface of the negative electrode active material.

In any implementation of the present application, the positive electrode plate includes a current collector and a positive electrode active layer loaded on the surface of the current collector; the composition of the positive electrode active layer comprises a lithium-ion positive electrode active material; and the metal lithium source is from lithium ions in the lithium-ion positive electrode active material contained in the positive electrode plate.

In any implementation of the present application, the secondary battery satisfies at least one of the following conditions c to d:
c, in the first negative electrode active layer, the mass percentage of the negative electrode active material is 80% to 98%; and
d, in the second negative electrode active layer, the mass percentage of the negative electrode active material is 80% to 98%.

In any implementation of the present application, the negative electrode active material includes at least one of mesocarbon microbeads, graphite, vitreous carbon, carbon nanotubes, a carbon-carbon composite material, carbon fibers, hard carbon, soft carbon, a silicon-based material, a magnesium-based material, a tin-based material, and an iron-based material.

In any implementation of the present application, the composition of the insulating material layer includes an insulating material and a binder.

In any implementation of the present application, the insulating material includes at least one of an organic insulating material and an inorganic insulating material; the inorganic insulating material is at least one of aluminium oxide, silicon oxide, zinc oxide, iron oxide, copper oxide, titanium oxide, mica, asbestos, marble, and ceramics; and the organic insulating material is at least one of natural rubber, styrene-butadiene rubber, butadiene rubber, and isoprene rubber.

A second aspect of the present application provides an electrical apparatus, including the secondary battery in the first aspect of the present application.

The above descriptions are only a summary of the technical solutions of the present application. In order to be able to understand the technical means of the present application more clearly, the technical means can be implemented according to the content of the specification. Furthermore, in order to make the above and other objectives, features and advantages of the present application more comprehensible, specific implementations of the present application are exemplified below.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the accompanying drawings:
FIG. 1 is a schematic diagram of an implementation of a secondary battery.
FIG. 2 is an exploded view of FIG. 1.
FIG. 3 is a schematic diagram of an implementation of a battery pack.
FIG. 4 is an exploded view of FIG. 3.
FIG. 5 is a schematic diagram of an implementation of an electrical apparatus using a secondary battery as a power source.

### Descriptions of reference numerals:

1: battery pack; 2: upper box; 3: lower box; 4: secondary battery; 41: case; 42: electrode assembly; 43: cover plate; and 5: electrical apparatus.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the description herein, unless otherwise stated, the term "or" is inclusive. For example, the phrase "A or B" means "A, B, or both A and B". More specifically, any one of the following satisfies the condition "A or B": A is true (or exists) and B is false (or does not exist); A is false (or does not exist) and B is true (or exists); or both A and B are true (or exist). Unless otherwise specified, terms used in the present application have the same meaning as commonly understood by a person skilled in the art. Unless otherwise specified, numerical values of parameters mentioned in the present application can be measured using various measurement methods commonly used in the art (for example, the values can be tested according to methods provided in the embodiments of the present application).

As mentioned in the background section, with the increase of demands, it is harder and harder for the traditional secondary battery to meet needs of people on its energy density and cycle performance. In a secondary battery such as a lithium-ion battery, a capacity balance between a negative electrode (NE) and a positive electrode (PE) is considered to be a key point. Generally, if the positive electrode is excessive in capacity, excess lithium ions released from the positive electrode during charging may be precipitated on the surface of the negative electrode to form lithium dendrites, which can easily cause a short circuit in the battery, thereby affecting the safety performance of the battery. The formation of the lithium dendrites may pierce a separator, causing a short circuit and then a safety accident. Therefore, to avoid lithium precipitation and obtain good safety in the traditional technology, the negative electrode generally needs to be designed with excessive capacity, namely, a ratio N/P of the total capacity of a negative electrode plate within a corresponding area to the total capacity of a positive electrode plate within a corresponding area is controlled to be greater than 1.

However, technical personnel of the present application has found in the actual production, research, and development process of a battery that when the ratio N/P of the total capacities of the positive and negative electrodes within the corresponding areas is controlled to be greater than 1, improvement on the energy density and cycle performance of the secondary battery such as the lithium-ion battery is limited, and it is difficult to meet the increasingly high demand of people for the energy density and cycle performance of the secondary battery.

Based on this, after a large number of exploratory experiments, the technical personnel of the present application has found a new way and broken the bottleneck of the traditional technology, controlling N/P<1. Meanwhile, the structure of the negative electrode plate is designed to achieve high energy density and avoid the formation of the lithium dendrites ,so that the secondary battery has high energy density and excellent cycle performance.

An implementation of the present application provides a secondary battery. The secondary battery includes a positive electrode plate and a negative electrode plate; the total capacity of the positive electrode plate is P, and the total capacity of the negative electrode plate is N; N and P satisfy: N/P<1;
the negative electrode plate includes a current collector, and a first negative electrode active layer, an insulating material layer and a second negative electrode active layer which are arranged on the surface of the current collector in sequence.

In the above secondary battery, on the one hand, the total capacities of the positive electrode and the negative electrode of the secondary battery are designed and controlled to achieve N/P<1, so that a number of lithium ions in the positive electrode plate is much greater than a number of lithium ions that the positive electrode plate can hold. During charging, one part of excess lithium ions may be deposited on the negative electrode plate in the form of metal lithium, thereby forming a metal lithium composite with a negative electrode active material on the negative electrode plate. The formation of the metal lithium composite can improve the energy density of the secondary battery. On the other hand, the other part of the excess lithium ions may form lithium dendrites when deposited on the surface of the negative electrode plate, thereby causing a problem of short circuit of the battery. By the arrangement of the first negative electrode active layer, the insulating material layer, and the second negative electrode active layer on the surface of the current collector of the negative electrode plate in sequence, the lithium dendrites can be deposited between the insulating material layer and the interface of the current collector. By the arrangement of the second negative electrode active layer to absorb and coat the lithium dendrites passing through the insulating material layer, thereby preventing a short circuit caused by piercing a separator by lithium dendrites formed on the surface of the negative electrode plate. Thus, the secondary battery has high energy density and excellent cycle performance.

In any implementation of the present application, the thickness of the insulating material layer is L₁µm; the thickness of the second negative electrode active layer is L₂µm; L₁and L₂ satisfy: L₁= -16×N/P + 17.5, 0.01≤L₂/L₁.

The technical personnel of the present application conduct a large number of creative experiments and summarize and analyze: The thickness of the insulating material layer is set according to a value of N/P. When the value of N/P is small, if there are more excess lithium ions, the lithium dendrites deposited on the negative electrode plate are thicker, so that the insulating material layer is controlled to be thicker. Meanwhile, a ratio of the thickness of the insulating material layer to the thickness of the second negative electrode active layer is controlled to ensure that at good ion transmission, the short circuit caused by piercing a separator by the lithium dendrites formed on the surface of the negative electrode plate is avoided. Thus, the secondary battery has high energy density and excellent cycle performance.

In any implementation of the present application, L₁ and L₂ satisfy: 0.01≤L₂/L₁≤ 0.1.

Preferably, L₁ and L₂ satisfy: 0.03≤L₂/L₁≤0.08.

In the above "0.01≤L₂/L₁≤0.1", the value of L₂/L₁includes a minimum value and a maximum value of the range, and every value between the minimum value and the maximum value. Specific examples of L₂/L₁ include but are not limited to the point values in this embodiment and: 0.01, 0.02, 0.03, 0.04, 0.05, 0.06, 0.07, 0.08, 0.09, and 0.1.

In any implementation of the present application, the thickness of the insulating material layer is 0.2 µm to 15 µm.

Optionally, the thickness of the above insulating material layer is 3.1 µm to 7.9 µm.

In the above "0.2 µm to 15 µm", the value includes a minimum value and a maximum value of the range, and every value between the minimum value and the maximum value. Specific examples include but are not limited to the point values in this embodiment and: 0.2 µm, 0.3 µm, 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.1 µm, 7.2 µm, 7.3 µm, µm, 7.5 µm, 7.7 µm, 7.8 µm, 7.9 µm, 8 µm, 8.5 µm, 9 µm, 9.5 µm, 10 µm, 10.5 µm, 11 µm, 11.5 µm, 12 µm, 12.5 µm, 13 µm, 13.5 µm, 4 µm, 14.5 µm, and 15 µm.

In any implementation of the present application, the thickness of the first negative electrode active layer is 10 µm to 300 µm.

In any implementation of the present application, the thickness of the first negative electrode active layer is 60 µm to 200 µm.

In any implementation of the present application, the composition of the second negative electrode active layer includes a lithium-philic material.

During cyclic use of the secondary battery, the lithium dendrites are deposited between the insulating material layer and the interface of the current collector and continue to be accumulated. When the lithium dendrites are accumulated to an extent, the lithium dendrites may pierce the insulating material layer, are then intercalated into the second negative electrode active layer, and overlap the second negative electrode active layer. On the one hand, the second negative electrode active layer plays a role of further coating the lithium dendrites to prevent the lithium dendrites from piercing the separator. On the other hand, the lithium-philic material in the second negative electrode active layer can be further combined with the lithium dendrites intercalated into the second negative electrode active layer, thereby absorbing the lithium dendrites and preventing the lithium dendrites from being further diffused, to achieve the purpose of passivation.

In any implementation of the present application, metal lithium is used as a reference electrode, and the overpotential of the lithium-philic material is not greater than 0.03 V.

Specifically, the overpotential of the above lithium-philic material is tested using a three-electrode electrochemical battery. The lithium-philic material is used as a working electrode; Li_{0.5}FePO₄is used as a reference electrode; and the metal lithium is used as a counter electrode. A specific test method is as follows:
The metal lithium is deposited on the working electrode at a current density of 10 µA cm⁻². A voltage of the working electrode relative to metal Li (Li/Li+) is a vertical coordinate, and a capacity is a horizontal coordinate. When the capacity increases, the voltage shows a trend of first decreasing and then remaining horizontal. In this process, when the curve has no inflection point or an absolute value of a voltage of the vertical coordinate corresponding to an inflection point is ≤0.03V, it indicates that a material to be tested has lithium affinity.

In any implementation of the present application, the lithium-philic material is one or more of Au, Ag, Zn, Fe, Co, Ni, Ga, Sn, In, Ge, Ti, Mu, Pt, Al, Mg, and their oxides, sulfides, fluorides, nitrides, chlorides and carbides.

In any implementation of the present application, in the second negative electrode active layer, the mass percentage of the lithium-philic material is 0.2% to 5%.

In any implementation of the present application, in the second negative electrode active layer, the mass percentage of the lithium-philic material is 0.3% to 3%.

In any implementation of the present application, metal lithium is used as a reference electrode, and the overpotential of the second negative electrode active layer is 0 to 0.3 V.

In any implementation of the present application, metal lithium is used as a reference electrode, and the overpotential of the first negative electrode active layer is 0.1 V to 0.6 V.

The overpotential of the second negative electrode active layer or the first negative electrode active layer is tested using a three-electrode electrochemical battery. The second negative electrode active layer or the first negative electrode active layer is used as the working electrode; Li_{0.5}FePO₄ is used as a reference electrode; and the metal lithium is used as the counter electrode. A specific test method is as follows:
The metal lithium is deposited on the working electrode at a current density of 10 µA cm⁻². A voltage of the working electrode relative to metal Li (Li/Li+) is a vertical coordinate, and a capacity is a horizontal coordinate. When the capacity increases, the voltage shows a trend of first decreasing and then remaining horizontal. In this process, an absolute value of a voltage of the vertical coordinate corresponding to an inflection point of the curve is the overpotential.

In any implementation of the present application, each of the composition of the first negative electrode active layer and the composition of the second negative electrode active layer includes a negative electrode active material and metal lithium; and the metal lithium is loaded on the surface of the negative electrode active material.

The metal lithium is loaded on the surface of the negative electrode active material to form a metal lithium composite, which is beneficial to improving the energy density of the secondary battery. The energy density of the secondary battery can reach 300 Wh/kg to 600 Wh/kg, or even be higher.

In any implementation of the present application, in the first negative electrode active layer, the mass percentage of the negative electrode active material is 80% to 99%.

In any implementation of the present application, in the first negative electrode active layer, the mass percentage of the negative electrode active material is 88% to 98%.

In any implementation of the present application, in the second negative electrode active layer, the mass percentage of the negative electrode active material is 80% to 99%.

In any implementation of the present application, in the second negative electrode active layer, the mass percentage of the negative electrode active material is 88% to 98%.

In any implementation of the present application, the above negative electrode active material includes at least one of mesocarbon microbeads, graphite, vitreous carbon, carbon nanotubes, a carbon-carbon composite material, carbon fibers, hard carbon, soft carbon, a silicon-based material, a magnesium-based material, a tin-based material, and an iron-based material.

Specific examples of the above negative electrode active material include but are not limited to: at least one of interphase carbon microspheres, natural graphite, artificial graphite, graphene, vitreous carbon, carbon nanotubes, carbon fibers, hard carbon, soft carbon, iron oxide, tin oxide, silicon oxide, magnesium oxide, and silicon-carbon composite.

In any implementation of the present application, each of the component of the first negative electrode active layer and the component of the second negative electrode active layer further includes a binder.

In any implementation of the present application, the percentage of the binder in the first negative electrode active layer is 0.5% to 10%.

In any implementation of the present application, the percentage of the binder in the first negative electrode active layer is 1% to 4%.

In any implementation of the present application, the percentage of the binder in the second negative electrode active layer is 0.5% to 10%.

In any implementation of the present application, the percentage of the binder in the second negative electrode active layer is 1% to 4%.

In any implementation of the present application, the component of the first negative electrode active layer further includes a conductive agent.

In any implementation of the present application, the percentage of the conductive agent in the first negative electrode active layer is 0.1% to 10%.

In any implementation of the present application, the percentage of the conductive agent in the first negative electrode active layer is 0.3% to 3%.

For example, the conductive agent may include one or more of superconducting carbon, acetylene black, carbon black, Ketjen black, carbon dot, carbon nanotubes, graphene, and carbon nanofibers.

For example, the binder may be one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

Further, each of the component of the first active layer and the component of the second active layer may further include a thickener. For example, the thickener may be sodium carboxymethyl cellulose CMC-Na.

In any implementation of the present application, the positive electrode plate includes a current collector and a positive electrode active layer loaded on the surface of the current collector; the composition of the positive electrode active layer includes a lithium-ion positive electrode active material; and the metal lithium source is from lithium ions in the lithium-ion positive electrode active material contained in the positive electrode plate.

It can be understood that in the above secondary battery, N/P is controlled to be less than 1. During charging, lithium ions contained in the lithium-ion positive electrode active material in the positive electrode active layer on the positive electrode plate are released, and the number of lithium ions in the positive electrode plate is much greater than the number of lithium ions that the positive electrode plate can hold. Some of the excess lithium ions may be deposited on the negative electrode plate in the form of metal lithium, thereby forming a metal lithium composite with the negative electrode active material on the negative electrode plate, and improving the energy density of the secondary battery.

It should be noted that charging and discharging can be performed during a formation stage of the battery, so that the negative electrode plate of the secondary battery delivered out of the factory has the metal lithium composite formed by the negative electrode active material and the metal lithium. The metal lithium composite can also be formed during subsequent use.

In any implementation of the present application, the mass percentage of the lithium-ion positive electrode active material in the positive electrode active layer is 80% to 98%.

The above lithium-ion positive electrode active material may use a lithium-ion positive electrode active material that is commonly known in the art and is applied to a secondary battery.

For example, the lithium-ion positive electrode active material may include at least one of the following materials: a lithium-containing phosphate of an olivine structure, a lithium transition metal oxide, and their respective modified compounds. However, the present application is not limited to these materials, or other conventional materials that can be used as positive electrode active materials of batteries can be used. These positive electrode active materials may be used alone or two or more of these positive electrode active materials may be combined for use. Among them, examples of the lithium transition metal oxide may include but are not limited to at least one of: a ternary material (NCM), a lithium-cobalt oxide (e.g. LiCoO₂), a lithium-nickel oxide (e.g. LiNiO₂), a lithium-manganese oxide (e.g. LiMnO₂ and LiMn₂O₄), a lithium-nickel-cobalt oxide, a lithium-manganese-cobalt oxide, a lithium-nickel-manganese oxide, a lithium-nickel-cobalt-manganese oxide (e.g. LiNi_{1/3}Co_{1/3}Mn_{1/3}O₂, or referred to as NCM333), LiNi_{0.5}Co_{0.2}Mn_{0.3}O₂ (or referred to as NCM523), LiNi_{0.5}Co_{0.25}Mn_{0.25}O₂ (or referred to as NCM211), LiNi_{0.6}Co_{0.2}Mn_{0.2}O₂ (or referred to as NCM622), LiNi_{0.8}Co_{0.1}Mn_{0.1}O₂ (or referred to as NCM811), a lithium-nickel-cobalt-aluminum oxide (e.g. LiNi_{0.85}Co_{0.15}Al_{0.05}O₂), and modified compounds thereof. Examples of the lithium-comprising phosphate of the olivine structure may include but are not limited to at least one of lithium iron phosphate (e.g. LiFePO₄, referred to as LFP), lithium manganese phosphate (e.g. LiMnPO₄), and lithium ferromanganese phosphate.

In any implementation of the present application, a molecular formula of an active material in the above first coated particles and/or the above second coated particles is: LiFeₓMn₍₁₋ₓ₎PO₄, where x is any number from 0 to 1.

It can be understood that when x is 0, LiFeₓMn₍₁₋ₓ₎PO₄ is LiMnPO₄; and when x is 1, LiFePO₄ is LiFePO₄.

A general structural formula of the NCM is LiNiₓ₁Co_{y1}Mn_{z1}O₂, where x1, y1, and z1 are any number from 0 to 1, and x1 + y1 + z1 = 1.

In any implementation of the present application, the component of the positive electrode active layer further includes a positive electrode binder and a positive electrode conductive agent, and the positive electrode active layer include 0.5% to 10% of the positive electrode binder by mass. Optionally, the positive electrode active layer includes 1% to 4% of the positive electrode binder by mass.

Optionally, the positive electrode active layer includes 0.1% to 8% of the positive electrode conductive agent by mass.

The positive electrode binder may be any type of binder commonly used in the art. For example, the positive electrode binder includes at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, fluorine-containing acrylate resin, sodium carboxymethyl cellulose, hydroxypropyl cellulose, sodium hydroxymethylcellulose, potassium hydroxymethylcellulose, diacetyl cellulose, polyacrylic acid, sodium alginate, styrene-butadiene rubber, acrylic butadiene rubber, polypyrrole, polyaniline, epoxy resin, and guardo gum.

For example, the positive electrode conductive agent may include at least one of superconducting carbon, acetylene black, carbon black, Ketjen black, carbon dot, carbon nanotubes, graphene, and carbon nanofibers.

The current collectors in both the positive electrode plate and the negative electrode plate may be current collectors of secondary batteries known in the art.

The current collectors may use metal foils or composite current collectors. For example, the metal foils may be copper foils. The composite current collector may include a high molecular material substrate layer and a metal layer formed on at least one surface of the high molecular material substrate. The composite current collectors may be formed by forming a metal material (copper, copper alloy, nickel, nickel alloy, titanium, titanium alloy, silver, silver alloy, and the like) on a polymer material substrate (such as a substrate of polypropylene (PP), polyethylene terephthalate (PET), polybutylene terephthalate (PBT), polystyrene (PS), or polyethylene (PE)).

In any implementation of the present application, the composition of the insulating material layer includes an insulating material and a binder.

In any implementation of the present application, the mass percentage of the insulating material in the insulating material layer is 20% to 95%. Optionally, preferably, the mass percentage of the insulating material in the insulating material layer is 50% to 75%.

Further, the component of the insulating material layer is a mixture of the insulating material and the binder.

The above binder may use a binder for a secondary battery known in the art, including at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, fluorine-containing acrylate resin, sodium carboxymethyl cellulose, hydroxypropyl cellulose, sodium hydroxymethylcellulose, potassium hydroxymethylcellulose, diacetyl cellulose, polyacrylic acid, sodium alginate, styrene-butadiene rubber, acrylic butadiene rubber, polypyrrole, polyaniline, epoxy resin, and guardo gum.

In any implementation of the present application, the insulating material includes at least one of an inorganic insulating material and an organic insulating material. The inorganic insulating material includes at least one of aluminum oxide, silicon oxide, zinc oxide, iron oxide, copper oxide, titanium oxide, mica, asbestos, marble, and ceramics. The organic insulating material may be selected from various types of insulating resin, such as natural rubber, styrene-butadiene rubber, butadiene rubber, and isoprene rubber.

In any implementation of the present application, the above insulating material includes at least one of aluminum oxide and styrene-butadiene rubber.

In any implementation of the present application, the above secondary battery further includes a separator. The separator is arranged between the positive electrode plate and the negative electrode plate.

In any implementation of the present application, the above secondary battery further includes an electrolyte solution.

The positive electrode plate, the negative electrode plate, and the separator may be prepared into an electrode assembly by a winding process or a lamination process. The electrolyte solution plays a role of conducting ions between the positive electrode and the negative electrode.

The electrolyte solution may include electrolyte salt and a solvent. For example, the electrolyte salt may be one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

For example, the above solvent may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and ethyl sulfonyl ethane (ESE).

In some implementations, the electrolyte solution further includes an additive. For example, the additive may include a negative electrode film formation additive, or may include a positive electrode film formation additive, or may further include an additive capable of improving properties of the battery, such as an additive for improving the overcharging performance of the battery, an additive for improving the high-temperature performance of the battery, and an additive for improving the low-temperature performance of the battery.

There is no particular limitation on the type of the separator. Any commonly known porous separator with good chemical stability and mechanical stability can be used.

In some embodiments, a material of the separator may be at least one of glass fibers, nonwoven cloth, polyethylene, polypropylene, and polyvinylidene fluoride. Or, the separator may be a separator with a boehmite coating, including a porous substrate and a boehmite coating loaded on the surface of the porous substrate. The separator may be a single-layer film or a multilayer composite film, which is not particularly limited. When the separator is the multilayer composite film, a material in each layer may be same or different, which is not particularly limited.

In some implementations, the secondary battery of the present application is a lithium-ion battery.

The preparation of the secondary battery includes the following steps S10 to S30.

Step S10, a positive electrode plate and a separator are provided. the total capacity of the positive electrode plate is P.

Step S20, a first negative electrode active layer, an insulating material layer, and a second negative electrode active layer are formed on the surface of a current collector in sequence to obtain a negative electrode plate. the total capacity of the negative electrode plate is N, where N/P is controlled to be less than 1.

It can be understood that by performing polarity design on the total capacities of both the positive electrode plate and the negative electrode plate to control a ratio of the total capacities, the design can be performed according to the following calculation formula: N = gram capacity of negative electrode material × surface density × mass percentage of negative electrode active material × size of negative electrode plate P = gram capacity of positive electrode material × surface density × mass percentage of positive electrode active material × size of positive electrode plate

The mass percentage of a negative electrode active material means the mass percentage of the negative electrode active material in the negative electrode active layer, and the mass percentage of a positive electrode active material means the mass percentage of the positive electrode active material in the positive electrode active layer. The size of the negative electrode plate means an area of the negative electrode plate loaded with the negative electrode active layer, and similarly, the size of the positive electrode plate means an area of the positive electrode plate loaded with the positive electrode active layer.

Further, the negative electrode plate of the present application includes a first negative electrode active layer and a second negative electrode active layer. According to the above calculation formula of the capacity of the negative electrode plate, capacities N1 and N2 corresponding to the first negative electrode active layer and the second negative electrode active layer are calculated respectively, and the total capacity of the negative electrode plate is N= N1+N2.

In some implementations, the positive electrode plate may be prepared by: dispersing the above components for preparing the positive electrode plate, such as the positive electrode active material, the positive electrode conductive agent, the positive electrode binder, and any other components, in a solvent (e.g. N-methyl pyrrolidone) to form positive electrode slurry; and coating a positive electrode current collector with the positive electrode slurry, and performing drying, cold pressing, and the like to obtain the positive electrode plate.

In step S20, the thickness of the insulating material layer is L₁µm; the thickness of the second negative electrode active layer is L₂µm; and it is controlled that L₁= -16×N/P + 17.5, 0.01≤L₂/L₁.

In some implementations, the negative electrode plate may be prepared by: dispersing the above components for preparing the negative electrode plate, such as the negative electrode active material, the negative electrode conductive agent, the negative electrode binder, and any other components in a solvent (e.g. N-methyl pyrrolidone) to form first negative electrode slurry, and respectively forming insulating slurry and second negative electrode slurry according to this step; coating a negative electrode current collector with the first negative electrode slurry, and drying the slurry; then coating the negative electrode current collector with the insulating slurry, and drying the slurry; finally coating the negative electrode current collector with the second negative electrode slurry; and performing drying, cold pressing, and the like to obtain the negative electrode plate.

The secondary battery may be prepared according to a conventional method in the art. For example, the positive electrode plate, the separator, and the negative electrode plate may be wound (or laminated) in order, and the separator is located between the positive electrode and the negative electrode to play a role of isolation, thus obtaining the electrode assembly; and the electrode assembly is arranged in an external package; the electrolyte solution is injected into the external package; and the external package is sealed, thus obtaining the secondary battery. The embodiments of the present application has no particular limitation on the shape of the secondary battery. The secondary battery may be cylindrical, square, or in any other shapes.

The above secondary battery further includes a shell configured to package the positive electrode plate, the negative electrode plate, the separator, and the electrolyte solution.

In any embodiment of the present application, the above shell may be a hard shell, such as a hard plastic shell, an aluminum shell, or a steel shell. Or, the shell may be a pouch, such as a bag-type pouch. A material of the pouch may be plastic. Examples of plastic may include polypropylene, polybutylene terephthalate, poly(butylene succinate), and the like.

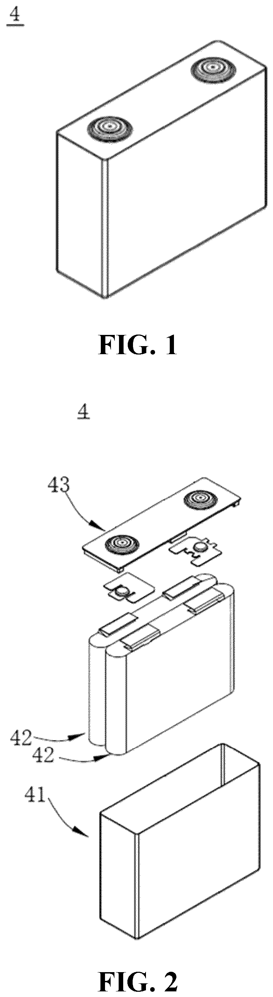

The present application has no particular limitation on the shape of the secondary battery. The secondary battery may be cylindrical, square, or in any other shapes. For example, FIG. 1 shows a secondary battery 4 of a square structure as an example.

In some embodiments of the present application, referring to FIG. 2, the shell may include a case 41 and a cover plate 43. The case 41 may include a bottom plate and a side plate connected to the bottom plate. The bottom plate and the side plate are enclosed to form an accommodating cavity. The case 41 has an opening that communicates with the accommodating cavity, and the cover plate 43 may cover the opening to close the accommodating cavity.

The positive electrode plate, the negative electrode plate, and the separator may form an electrode assembly 42 by a winding process or a lamination process. The electrode assembly 42 is encapsulated in the accommodating cavity. The electrolyte solution infiltrates the electrode assembly 42. The battery 4 may contain one or more electrode assemblies 42, and the number may be adjusted according to a need.

The present application further provides an electrical apparatus. The electrical apparatus includes the above secondary battery.

Further, in the above electrical apparatus, the secondary battery may exist in the form of a battery cell, or may be further assembled into a battery pack.

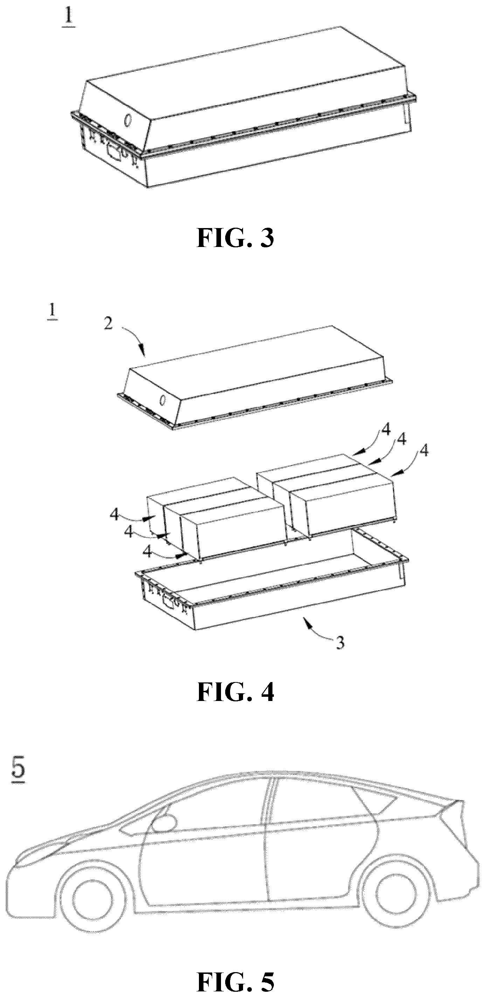

FIG. 3 and FIG. 4 show a battery pack 1 as an example. The battery pack 1 includes a battery box and one or more secondary batteries 4 arranged in the battery box. The battery box includes an upper box 2 and a lower box 3. The upper box 2 can cover the lower box 3 and forms a closed space for the secondary batteries 4.

The plurality of secondary batteries 4 may be arranged in the battery box in any manner.

The above secondary batteries or the battery pack assembled with the secondary batteries can be used as a power source for the electrical apparatus or an energy storage unit for the electrical apparatus.

The above electrical apparatus may include but is not limited to a mobile device (such as a mobile phone and a laptop), an electric vehicle (such as a battery electric vehicle, a hybrid electric vehicle, a plug-in hybrid electric vehicle, an electric bicycle, an electric scooter, an electric golf cart, and an electric truck), an electric train, a ship, a satellite, and an energy storage system

FIG. 5 shows an electrical apparatus 5 as an example. The electrical apparatus 5 is a battery electric vehicle, a hybrid electric vehicle, a plug-in hybrid electric vehicle, or the like. To meet demands of the electrical apparatus 5 for high power and high energy density of a secondary battery, a battery pack may be used.

For another example, the electrical apparatus may be a mobile phone, a tablet, a laptop, or the like. The apparatus is usually required to be light and thin, and may use a battery as a power source.

The present invention will be described below in conjunction with specific embodiments, but the present invention is not limited to the following embodiments. It should be understood that the attached claims summarize the scope of the present invention. Under the guidance of the concept of the present invention, those skilled in the art should realize that changes made to the embodiments of the present invention will be covered by the spirit and scope of the claims of the present invention.

The following are specific embodiments.

### Specific embodiments

### Embodiment 1

### (1) Preparation of a positive electrode plate

A cobalt manganese (NCM) ternary material (LiNi_{0.8}Mn_{0.1}Co_{0.1}O₂), a conductive agent carbon black, and a binder polyvinylidene fluoride (PVDF) were mixed in a mass ratio of 97:1:2; N-methylpyrrolidone was added for mixing and stirring for six hours to obtain positive electrode slurry; then the surface of an aluminum foil with the thickness of 13 µm was uniformly coated with the positive electrode slurry; drying and cold pressing were performed to form a positive electrode active layer; and the positive electrode active layer was cut to obtain the positive electrode plate.

### (2) Preparation of a negative electrode plate

A first active material artificial graphite, a conductive agent carbon black, a binder styrene-butadiene rubber (SBR), and a thickener sodium hydroxymethyl cellulose (CMC) were added into deionized water at a weight ratio of 97: 0.5: 1.25: 1.25 for mixing and stirring for six hours to obtain first negative electrode slurry; and a copper foil with the thickness of 6 µm of a negative electrode current collector was uniformly coated with the first negative electrode slurry, and was dried to form a first negative electrode active layer with the thickness of L₀, specifically refer to Table 1.

Polyvinylidene fluoride and Al₂O₃ were mixed in a weight ratio of 1:1; N-methylpyrrolidone was added for mixing and stirring for 06 hours to obtain insulating slurry; and the surface of the first negative electrode active layer was uniformly coated with the insulating slurry and was dried to form an insulating material layer with the thickness of L₁. Specifically refer to Table 1.

A second active material graphite, a binder styrene-butadiene rubber (SBR), and a thickener sodium hydroxymethyl cellulose (CMC) were mixed at a weight ratio of 1: 0.5: 0.5 and were then added into deionized water for mixing and stirring for six hours to obtain second negative electrode slurry; the surface of an insulating material layer was uniformly coated with the second negative electrode slurry and was dried to form a second negative electrode active layer with the thickness of L₂.

A total capacity N of the negative electrode plate and a total capacity P of the positive electrode plate might be calculated according to the following calculation formula. For the value of N/P, specifically refer to Table 1. N = gram capacity of negative active material × surface density × percentage of negative electrode × size of negative electrode plate P = gram capacity of positive electrode active material × surface density × percentage of positive electrode × size of positive electrode plate

The mass percentage of a negative electrode active material means the mass percentage of the negative electrode active material in the negative electrode active layer, and the mass percentage of a positive electrode active material means the mass percentage of the positive electrode active material in the positive electrode active layer. The size of the negative electrode plate means an area of the negative electrode plate loaded with the negative electrode active layer, and similarly, the size of the positive electrode plate means an area of the positive electrode plate loaded with the positive electrode active layer.

The negative electrode plate includes a first negative electrode active layer and a second negative electrode active layer. According to the above calculation formula of the capacity of the negative electrode plate, capacities N1 and N2 corresponding to the first negative electrode active layer and the second negative electrode active layer are calculated respectively, and the total capacity of the negative electrode plate is N= N1+N2.

Thicknesses of layers on an electrode plate may be tested by a method known in the art, specifically by a step profiler test method: A probe of a step profiler gently slid across the surface of a sample with a low force, and micron-level or even nanometer-level raised and recessed parts on the surface of the sample were amplified millions of times by a sensor connected to the probe, and then converted into electronic signals. The signals were input into computer software, and were finally displayed in the form of digital and graphical data.

### (3) Preparation of an electrolyte solution

LiPF₆ was dissolved in a mixed solvent to prepare an electrolyte solution with a concentration of 1 mol/L. The mixed solvent was formed by mixing ethylene carbonate, methyl ethyl carbonate, and diethyl carbonate at a volume ratio of 1: 1: 1.

### (4) Preparation of a separator

A conventional polypropylene (PP) film was used as the separator.

### (5) Preparation of a lithium-ion battery

The above positive electrode plate, the above separator, and the above negative electrode plate were stacked in order to obtain a bare battery cell; the bare battery cell was placed in a packaging shell; after drying was performed, the electrolyte solution was injected; vacuum packaging, standing, formation, shaping, and other procedures were performed to obtain the lithium-ion battery.

(6) Test on the performance of the prepared lithium-ion battery, including:

### 1. Test on the energy density of the lithium-ion battery

At 25 °C or below, the lithium-ion battery was charged at a constant current of 0.33C rate to a voltage of 4.25 V, and then charged at a constant voltage of 4.25 V to a current of 0.05C rate. In this case, the lithium-ion battery reached a fully charged state. The lithium-ion battery was then left to stand for five minutes, discharged at a constant current of 0.33C rate to a voltage of 2.8 V, and left to stand for another five minutes. A capacity and a voltage platform of the lithium-ion battery during discharging at the constant current of 0.33C rate were recorded, and a mass of the lithium-ion battery was finally measured. Energy density (Wh/kg) of secondary battery =(capacity of lithium-ion battery discharged at constant current of 0.33 rate x voltage platform of lithium-ion battery discharged at constant current of 0.33C rate)/mass of lithium-ion battery.

### 2. Test on the cycle life of the lithium-ion battery at 25 °C or below

At 25 °C or below, when the lithium-ion battery was charged at a constant current of 1C rate to 4.25 V, the lithium-ion battery was then charged at a constant voltage. The charging was stopped until the charging current drops to current of 0.05C rate. When the lithium-ion battery was then discharged at a constant current of 1C rate to 2.8 V, discharging was stopped. In this case, the number of cycles is 1. Charging and discharging were repeatedly until the capacity of the battery drops to 80% of the initial capacity, and the test was stopped. Use the number of cycles of the lithium-ion battery in this case was used as a 25°C cycle life of the secondary battery.

Refer to Table 1 for specific results

### Embodiment 2

Embodiment 2 was basically the same as Embodiment 1, except that: in the preparation process of the negative electrode plate in step (2), the active material graphite in the second negative electrode slurry was replaced with graphene, and the total capacity N of the negative electrode plate was kept the same as that in Embodiment 1.

The remaining steps were the same as those in Embodiment 1. Refer to Table 1 for specific parameters and test results.

### Embodiment 3

Embodiment 2 was basically the same as Embodiment 1, except that: in the preparation process of the negative electrode plate in step (2), the active material graphite in the second negative electrode slurry was replaced with magnesium oxide, and the total capacity N of the negative electrode plate was kept the same as that in Embodiment 1.

The remaining steps were the same as those in Embodiment 1. Refer to Table 1 for specific parameters and test results.

### Embodiment 4

Embodiment 3 was basically the same as Embodiment 1, except that: in the preparation process of the negative electrode plate in step (2), the active material graphite in the first negative electrode slurry was replaced with silicon oxide;L₀, was adjusted; and the total capacity N of the negative electrode plate was kept the same as that in Embodiment 2.

The remaining steps were the same as those in Embodiment 2. Refer to Table 1 for specific parameters and test results.

### Embodiment 5

Embodiment 5 was basically the same as Embodiment 1, except that: in the preparation process of the negative electrode plate in step (2), the active material graphite in the first negative electrode slurry was replaced with iron oxide; Al₂O₃ in the insulating slurry was replaced with styrene-butadiene rubber in the same mass; polyvinylidene fluoride was replaced with sodium carboxymethylcellulose; and the total capacity N of the negative electrode plate was kept the same as that in Embodiment 2.

The remaining steps were the same as those in Embodiment 2. Refer to Table 1 for specific parameters and test results.

### Embodiment 6

Embodiment 6 is basically the same as Embodiment 1, except that: In the preparation process of the negative electrode plate in step (2), Al₂O₃ in the insulating slurry wasreplaced with a mixture of Al₂O₃ and styrene-butadiene rubber in the same mass, where a mass ratio of Al₂O₃ to styrene-butadiene rubber was 1:1 polyvinylidene fluoride was replaced with sodium carboxymethyl cellulose; and the total capacity N of the negative electrode plate was kept the same as that of Example 2.

The remaining steps were the same as those in Embodiment 2. Refer to Table 1 for specific parameters and test results.

### Embodiments 7 to 9

Embodiments 7 to 9 were basically the same as Embodiment 1, except that: in the preparation process of the negative electrode plate in step (2), the amount of the negative electrode active material added in the first active slurry was adjusted to change the total capacity N of the negative electrode plate, thereby changing the value of N/P, and the values of L₁ and L₂ were correspondingly changed, refer to Table 1 for details.

The remaining steps were the same as those in Embodiment 2. Refer to Table 1 for specific parameters and test results.

### Embodiments 10 to 13

Embodiments 10 to 13 were basically the same as Example 2, except that: in the preparation process of the negative electrode plate in step (2), the thickness of the second negative electrode active layer was adjusted, and the capacity N of the negative electrode plate was ensured to be basically the same as that of Embodiment 2, refer to Table 1 for details.

The remaining steps were the same as those in Embodiment 1. Refer to Table 1 for specific parameters and test results.

### Embodiment 14

Example 14 is basically the same as Example 2, except that: in the preparation process of the negative electrode plate in step (2), the second active material graphene, the lithium-philic material ZnO, the binder styrene-butadiene rubber (SBR), and the thickener sodium carboxymethyl cellulose (CMC) were mixed in a weight ratio of 96:3:0.5:0.5 and were added into deionized water for mixing and stirring for six hours to obtain second negative electrode slurry; and the capacity N of the negative electrode plate was ensured to be basically the same as that of Embodiment 2, refer to Table 1 for details.

The remaining steps were the same as those in Embodiment 1. Refer to Table 1 for specific parameters and test results.

### Comparative example 1

Comparative example 1 was basically the same as Embodiment 2, except that: in the preparation process of the negative electrode plate in step (2), only the first negative electrode active layer was formed, and the value of N/P in the lithium-ion battery was controlled to 0.6.

The remaining steps were the same as those in Embodiment 2. Refer to Table 1 for specific parameters and test results.

### Comparative example 2

Comparative example 2 was basically the same as Embodiment 4, except that: in the preparation process of the negative electrode plate in step (2), only the first negative electrode active layer was formed, and the value of N/P in the lithium-ion battery was controlled to 0.6.

The remaining steps were the same as those in Embodiment 4. Refer to Table 1 for specific parameters and test results.

### Comparative example 3

Comparative example 3 was basically the same as Embodiment 5, except that: in the preparation process of the negative electrode plate in step (2), only the first negative electrode active layer was formed, and the value of N/P in the lithium-ion battery was controlled to 0.6.

The remaining steps were the same as those in Embodiment 5. Refer to Table 1 for specific parameters and test results.

### Comparative example 4

Comparative example 4 was basically the same as Embodiment 2, except that: in the preparation process of the negative electrode plate in step (2), no second negative electrode active layer was formed, and the value of N/P in the lithium-ion battery was kept the same as that of Embodiment 2.

The remaining steps were the same as those in Embodiment 2. Refer to Table 1 for specific parameters and test results.

Refer to Table 1 for parameters and test results of the embodiments and the comparative examples.

**Table 1**

| | First active material | L₀ (µm ) | N/ P | Insulating material Layer component | L1 (µm ) | Second active material | L₂ (µm) | Energy density/( Wh/kg) | Cycle life (circle) |
|---|---|---|---|---|---|---|---|---|---|
| Embodiment 1 | Graphite | 90 | 0.6 | Polyvinylidene fluoride+Al₂O₃ | 7.9 | Graphite | 0.237 | 365 | 850 |
| Embodiment 2 | Graphite | 90 | 0.6 | Polyvinylidene fluoride+Al₂O₃ | 7.9 | Graphene | 0.237 | 365 | 897 |
| Embodiment 3 | Graphite | 90 | 0.6 | Polyvinylidene fluoride+Al₂O₃ | 7.9 | MgO | 0.237 | 365 | 958 |
| Embodiment 4 | Silicon oxide | 60 | 0.6 | Polyvinylidene fluoride+Al₂O₃ | 7.9 | Graphite | 0.237 | 445 | 584 |
| Embodiment 5 | Iron oxide | 60 | 0.6 | Sodium carboxymethyl cellulose + styrene-butadiene rubber | 7.9 | Graphite | 0.237 | 415 | 545 |
| Embodiment 6 | Graphite | 60 | 0.6 | Sodium carboxymethyl cellulose + styrene-butadiene rubber+Al₂O₃ | 7.9 | Graphite | 0.237 | 365 | 890 |
| Embodiment 7 | Graphite | 90 | 0.5 | Polyvinylidene fluoride+Al₂O₃ | 9.5 | Graphite | 0.285 | 384 | 700 |
| Embodiment 8 | Graphite | 90 | 0.8 | Polyvinylidene fluoride+Al₂O₃ | 4.7 | Graphite | 0.141 | 321 | 1100 |
| Embodiment 9 | Graphite | 90 | 0.9 | Polyvinylidene fluoride+Al₂O₃ | 3.1 | Graphite | 0.093 | 290 | 1300 |
| Embodiment 10 | Graphite | 90 | 0.6 | Polyvinylidene fluoride+Al₂O₃ | 7.9 | Graphene | 0.395 | 360 | 924 |
| Embodiment 11 | Graphite | 90 | 0.6 | Polyvinylidene fluoride+Al₂O₃ | 7.9 | Graphene | 0.632 | 358 | 867 |
| Embodiment 12 | Graphite | 90 | 0.6 | Polyvinylidene fluoride+Al₂O₃ | 7.9 | Graphene | 0.79 | 350 | 843 |
| Embodiment 13 | Graphite | 90 | 0.6 | Polyvinylidene fluoride+Al₂O₃ | 7.9 | Graphene | 0.079 | 350 | 620 |
| Embodiment 14 | Graphite | 90 | 0.6 | Polyvinylidene fluoride+Al₂O₃ | 7.9 | Graphene | 0.237 | 365 | 943 |
| Comparative example 1 | Graphite | 90 | 0.6 | / | / | / | / | 380 | 300 |
| Comparative example 2 | Silicon oxide | 60 | 0.6 | / | / | / | / | 450 | 236 |
| Comparative example 3 | Iron oxide | 60 | 0.6 | / | / | / | / | 420 | 215 |
| Comparative example 4 | Graphite | 90 | 0.6 | Polyvinylidene fluoride+Al₂O₃ | 7.9 | / | / | 380 | 600 |

| | | | | | | | | | |
|---|---|---|---|---|---|---|---|---|---|
| Where "/" represents that the structure or material does not exist. | | | | | | | | | |

It can be seen from the data in Table 1: the secondary battery prepared by the technology of the present application has high energy density and excellent cycle performance.

It should be finally noted that: The foregoing embodiments are merely intended to describe the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to part or all technical features thereof. These modifications or replacements do not make the essence of the corresponding technical solutions depart from the scopes of the technical solutions of the various embodiments of the present application, and shall fall within the scopes of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A secondary battery, wherein the secondary battery comprises a positive electrode plate and a negative electrode plate; the total capacity of the positive electrode plate is P, the total capacity of the negative electrode plate is N, and N and P satisfy: N/P<1; and
the negative electrode plate comprises a current collector, and a first negative electrode active layer, an insulating material layer and a second negative electrode active layer which are arranged on the surface of the current collector in sequence.

2. The secondary battery according to claim 1, wherein the thickness of the insulating material layer is L₁ in µm, the thickness of the second negative electrode active layer is L₂ in µm, and L₁ and L₂ satisfy: L₁= -16×N/P + 17.5, 0.01≤L₂/L₁.

3. The secondary battery of claim 2, wherein L₁ and L₂ satisfy: 0.01≤L₂/L₁≤0.1;
optionally, L₁ and L₂ satisfy: 0.03≤L₂/L₁≤0.08.

4. The secondary battery according to any one of claims 1 to 3, wherein the thickness of the insulating material layer is 0.2 µm to 15 µm;
optionally, the thickness of the insulating material layer is 3.1 µm to 7.9 µm.

5. The secondary battery according to any one of claims 1 to 4, wherein the thickness of the first negative electrode active layer is 10 µm to 300µm;
optionally, the thickness of the first negative electrode active layer is 60 µm to 200 µm.

6. The secondary battery according to any one of claims 1 to 5, wherein the composition of the second negative electrode active layer comprises a lithium-philic material.

7. The secondary battery according to claim 6, wherein metal lithium is used as a reference electrode, and the overpotential of the lithium-philic material is not greater than 0.03 V.

8. The secondary battery according to any one of claims 6 to 7, wherein the lithium-philic material is one or more of Au, Ag, Zn, Fe, Co, Ni, Ga, Sn, In, Ge, Ti, Mu, Pt, Al, Mg, and their oxides, sulfides, fluorides, nitrides, chlorides and carbides.

9. The secondary battery according to any one of claims 6 to 8, wherein the secondary battery satisfies at least one of the following conditions a to b:
a, in the second negative electrode active layer, the mass percentage of the lithium-philic material is 0.2% to 5%;
optionally, in the second negative electrode active layer, the mass percentage of the lithium-philic material is 0.3% to 3%; and
b, metal lithium is used as a reference electrode, and the overpotential of the second negative electrode active layer is 0 to 0.3 V.

10. The secondary battery according to claim 1 to 9, wherein metal lithium is used as a reference electrode, and the overpotential of the first negative electrode active layer is 0.1 V to 0.6 V.

11. The secondary battery according to any one of claims 1 to 10, wherein each of the composition of the first negative electrode active layer and the composition of the second negative electrode active layer comprises a negative electrode active material and metal lithium; and the metal lithium is loaded on the surface of the negative electrode active material.

12. The secondary battery according to claim 11, wherein the positive electrode plate comprises a current collector and a positive electrode active layer loaded on the surface of the current collector; the composition of the positive electrode active layer comprises a lithium-ion positive electrode active material; and the metal lithium source is from lithium ions in the lithium-ion positive electrode active material contained in the positive electrode plate.

13. The secondary battery according to any one of claims 11 to 12, wherein the secondary battery satisfies at least one of the following conditions c to d:
c, in the first negative electrode active layer, the percentage of the negative electrode active material is 80% to 98%; and
d, in the second negative electrode active layer, the percentage of the negative electrode active material is 80% to 98%.

14. The secondary battery according to any one of claims 11 to 13, wherein the negative electrode active material comprises at least one of mesocarbon microbeads, graphite, vitreous carbon, carbon nanotubes, a carbon-carbon composite material, carbon fibers, hard carbon, soft carbon, a silicon-based material, a tin-based material, and an iron-based material.

15. The secondary battery according to any one of claims 1 to 14, wherein the composition of the insulating material layer comprises an insulating material and a binder.

16. The secondary battery according to claim 15, wherein the insulating material comprises at least one of an organic insulating material and an inorganic insulating material; the inorganic insulating material is at least one of aluminium oxide, silicon oxide, zinc oxide, iron oxide, copper oxide, titanium oxide, mica, asbestos, marble, and ceramics; and the organic insulating material is at least one of natural rubber, styrene-butadiene rubber, butadiene rubber, and isoprene rubber.

17. An electrical apparatus, wherein the electrical apparatus comprises the secondary battery according to any one of claims 1 to 16.
